# EUROPEAN PATENT SPECIFICATION

(11) **EP 3 798 492 B1**
(45) Date of publication and mention of the grant of the patent: **05.06.2024**
(21) Application number: 19207171.0
(22) Date of filing: 05.11.2019
(51) Int. Cl.: F16L 37/23, F16L 17/073

(54) **QUICK-INSERTION COUPLING JOINT**
SCHNELLSTECKKUPPLUNG
JOINT DE COUPLAGE À INSERTION RAPIDE

(30) Priority: 30.09.2019 CN 201910939876
(43) Date of publication of application: 31.03.2021
(73) Proprietor: Luxe Machinery Co., Ltd., 330800 Gaoan Jiangxi (CN)
(72) Inventor: LU, Xiaobin, Gaoan, Jiangxi 330800 (CN); YANG, Chengyong, Gaoan, Jiangxi 330800 (CN)
(74) Representative: Isern Patentes y Marcas S.L.

(56) References cited:
- DE-U1-202013 007 581
- US-A- 2 512 999
- US-A- 2 708 124
- US-A- 2 750 209
- US-A- 4 614 348
- US-A- 4 781 399

## Description

### TECHNICAL FIELD

The present invention relates to the technical field of pipe joints, and in particular, to a quick-insertion coupling joint.

### BACKGROUND

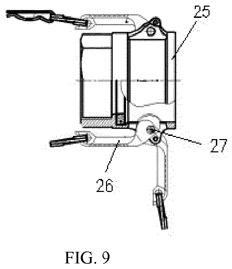

A quick joint includes a hydraulic quick joint and various fluid quick joints, which is a quick-assembly/disassembly connector for quickly connecting or disconnecting pipelines and is widely applied to the fields of petroleum, metallurgy, hydropower, construction machinery, ship, electromechanical equipment and the like. A connecting structure of the quick joint is the most important portion of the quick joint, and its connecting manner and structure directly determine use convenience, reliability and product quality of the quick joint. As shown in FIG. 9, the existing quick joint generally includes a main body 25, handles 26 and pins 27, and its seal connection is achieved by rotating the handle to lock an arc bulge at one end of the handle into an arc groove of a male adapter, where the handle occupies a large space and has a complex structure, the quick joint can be fixedly connected by strongly pressing the handle, assembly of the quick joint wastes time and labors, and a high machining accuracy is necessary to ensure sealing performance of the quick joint. Therefore, it urgently needs to develop a quick joint having a simple structure, high assembly efficiency and great sealing performance.

US 4 781 399 A describes a quick-connect coupling having improved seal.

US 2 708 124 A discloses a fluid pressure actuated gasket.

US 2 512 999 A relates to a coupling for connecting together conduits under fluid pressure.

US 2 750 209 A describes a valve coupling.

### SUMMARY

An objective of the present invention is to provide a quick-insertion coupling joint, which has a simple structure, a compact size, and great sealing performance, and can be conveniently and quickly assembled and disassembled, in order to solve the problem in the prior art.

To achieve the above purpose, the present invention, which is defined in claim 1, provides the following technical solution.

A quick-insertion coupling joint includes a female coupler body, a sliding sleeve, elastic elements, a sealing gasket, limiting elements and a retaining ring, where a socket is arranged in one end of the female coupler body and is used for connecting a Camlock male adapter, a seal retainer is arranged in an inner wall of the socket, the sealing gasket is arranged on one surface, close to a port of the socket, of the seal retainer, multiple limiting holes are circumferentially arranged in a side wall of the socket, a limiting element is arranged in each limiting hole, the limiting hole can limit the limiting element to prevent the limiting element from separating from the limiting hole inwards, a first boss is arranged on an outer side wall of the female coupler body, the sliding sleeve sleeves the exterior of the first boss, a coupling groove is arranged in the outer side wall of the female coupler body, the coupling groove is arranged between the port of the socket and the limiting hole, the retaining ring is arranged in the coupling groove, a second boss is arranged on an inner wall of the sliding sleeve, the second boss is arranged between the first boss and the retaining ring, the internal diameter of the second boss is less than the external diameter of the retaining ring, the elastic elements sleeve the exterior of the female coupler body while the elastic elements are arranged between the second boss and the first boss, the elastic elements are in a compression state, and a limiting groove is circumferentially arranged in an outer wall of the Camlock male adapter; when the Camlock male adapter is inserted into the socket and the second boss slides to come into contact with the retaining ring, the second boss can ensure that the limiting element is fixed in the limiting groove and the Camlock male adapter tightly presses the sealing gasket at the seal retainer; and an end face, away from the first boss, of the second boss is inclined to one end away from the first boss, so, when the second boss slides away from the limiting hole, the limiting element can be disconnected from the limiting groove.

Preferably, anti-skid mesh-shaped bulges are arranged on an outer surface of the sliding sleeve.

According to the invention, a rectangular annular groove is arranged in an inner wall of the sealing gasket.

Preferably, the seal retainer is a sealing boss, the sealing gasket is arranged on one surface, close to the port of the socket, of the sealing boss, a connection port is arranged at one end, away from the socket, of the female coupler body, the connection port and the socket are interconnected, and the connection port is used for connecting a pipe fitting.

Preferably, the seal retainer is a sealing diaphragm, the sealing diaphragm seals one end, away from the socket, of the female coupler body, the sealing gasket is arranged on one surface, close to the port of the socket, of the sealing diaphragm.

Preferably, the limiting element is a limiting ball or a limiting block.

Preferably, a dust-proof boss is arranged on the inner wall of the sliding sleeve, the dust-proof boss is arranged at one end, close to the port of the socket, of the sliding sleeve, and the internal diameter of the dust-proof boss is greater than the external diameter of the socket.

Preferably, the elastic element is a spring.

Compared with the prior art, the present invention achieves the following technical effects:
The present invention provides the quick-insertion coupling joint, where the sliding sleeve is pushed by hand in order that the second boss is away from the limiting hole and the limiting element can move outwards from the limiting hole in a radial direction of the socket, the Camlock male adapter is inserted into the socket of the female coupler body and extrudes the sealing gasket, the sliding sleeve is loosened, and at this time, the sliding sleeve moves towards the limiting hole and extrudes the limiting element under the elastic action of the elastic elements such that the limiting element is fixed in the limiting groove of the Camlock male adapter, thereby preventing the Camlock male adapter from moving outwards and achieving quick connection of the joint, so the structure is simple, a little space is occupied, and sealing performance of the joint is ensured. When the female coupler body and the Camlock male adapter need to be disconnected, the female coupler body is held by hand, the sliding sleeve is pushed in order that the second boss is away from the limiting hole, at this time, the limiting element is disconnected from the second boss and moves outwards from the limiting hole in the radial direction of the socket, and after the limiting element is disconnected from the limiting groove of the Camlock male adapter, the Camlock male adapter and the female coupler body are separated, so disassembly is convenient and quick.

### BRIEF DESCRIPTION OF THE DRAWINGS

To describe the technical solutions in the embodiments of the present invention or in the prior art more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram showing a connecting structure of a quick-insertion coupling joint and a Camlock male adapter.
FIG. 2 is a schematic diagram showing a connecting structure of a quick-insertion coupling joint and a Camlock male adapter.
FIG. 3 is a schematic diagram showing a connecting structure of a quick-insertion coupling joint and a Camlock male adapter.
FIG. 4 is a schematic structural diagram of a sealing gasket in a quick-insertion coupling joint provided by the present invention.
FIG. 5 is a schematic structural diagram of a limiting hole in a quick-insertion coupling joint provided by the present invention.
FIG. 6 is a perspective view of a structure of a limiting block in a quick-insertion coupling joint provided by the present invention.
FIG. 7 is an axial sectional view of a limiting block and a limiting hole in a quick-insertion coupling joint provided by the present invention.
FIG. 8 is a radial sectional view of the limiting block and the limiting hole in the quick-insertion coupling joint in FIG. 7.
FIG. 9 is a schematic structural diagram of the existing quick joint.

In the drawings: 1-female coupler body, 2-sliding sleeve, 3-elastic element, 4-sealing gasket, 5-limiting element, 6-retaining ring, 7-Camlock male adapter, 8-seal retainer, 9-limiting hole, 10-first boss, 11-coupling groove, 12-second boss, 13-limiting groove, 14-anti-skid mesh-shaped bulge, 15-rectangular annular groove, 16-internal thread, 17-first hole, 18-second hole, 19-annular boss, 20-dust-proof boss, 21-end face, 22-tail pipe, 23-coupling bulge, 24-limiting bulge, 25-main body, 26-handle, and 27-pin.

### DETAILED DESCRIPTION

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

An objective of the present invention is to provide a quick-insertion coupling joint, which has a simple structure, a compact size, and great sealing performance, and can be conveniently and quickly assembled and disassembled, in order to solve the problem in the prior art.

To make the foregoing objective, features, and advantages of the present invention clearer and more comprehensible, the present invention is further described in detail below with reference to the accompanying drawings and specific embodiments.

### Embodiment 1

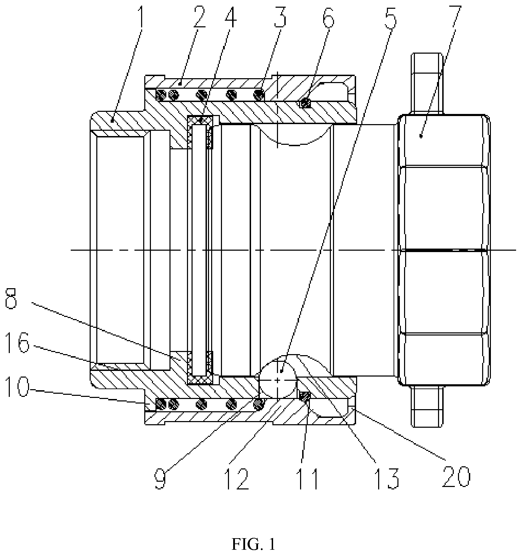

As shown in FIG. 1, the embodiment provides a quick-insertion coupling joint, which includes a female coupler body 1, a sliding sleeve 2, elastic elements 3, a sealing gasket 4, limiting elements 5 and a retaining ring 6, a socket is arranged in one end of the female coupler body 1 and is used for connecting a Camlock male adapter 7, a seal retainer 8 is arranged in an inner wall of the socket, the sealing gasket 4 is arranged on one surface, close to a port of the socket, of the seal retainer 8, multiple limiting holes 9 are circumferentially arranged in a side wall of the socket, a limiting element 5 is arranged in each limiting hole 9, the limiting hole 9 can limit the limiting element 5 to prevent the limiting element from separating from the limiting hole 9 inwards, a first boss 10 is arranged on an outer side wall of the female coupler body 1, the sliding sleeve 2 sleeves the exterior of the first boss 10, a coupling groove 11 is arranged in the outer side wall of the female coupler body 1, the coupling groove 11 is arranged between the port of the socket and the limiting hole 9, the retaining ring 6 is arranged in the coupling groove 11, a second boss 12 is arranged on an inner wall of the sliding sleeve 2, the second boss 12 is arranged between the first boss 10 and the retaining ring 6, the internal diameter of the second boss 12 is less than the external diameter of the retaining ring 6, the elastic elements 3 sleeve the exterior of the female coupler body 1 while the elastic elements 3 are arranged between the second boss 12 and the first boss 10, the elastic elements 3 are in a compression state, and a limiting groove 13 is circumferentially arranged in an outer wall of the Camlock male adapter 7. When the Camlock male adapter 7 is inserted into the socket and the second boss 12 slides to come into contact with the retaining ring 6, the second boss 12 can ensure that the limiting element 5 is fixed in the limiting groove 13 and the Camlock male adapter 7 tightly presses the sealing gasket 4 at the seal retainer 8; and an end face, away from the first boss 10, of the second boss 12 is inclined to one end away from the first boss 10, so, when the second boss 12 slides away from the limiting hole 9, the limiting element 5 can be disconnected from the limiting groove 13.

When the quick-insertion coupling joint is assembled, the sliding sleeve 2 is pushed by hand in order that the second boss 12 is away from the limiting hole 9 and the limiting element 5 can move outwards from the limiting hole 9 in a radial direction of the socket and cannot be disconnected from the limiting hole 9 under the blocking action of the sliding sleeve 2, the Camlock male adapter 7 is inserted into the socket of the female coupler body 1 and extrudes the sealing gasket 4, the sliding sleeve 2 is loosened, and at this time, the sliding sleeve 2 moves towards the limiting hole 9 and extrudes the limiting element 5 under the elastic action of the elastic elements 3 such that the limiting element 5 is fixed in the limiting groove 13 of the Camlock male adapter 7, thereby preventing the Camlock male adapter 7 from moving outwards and achieving quick connection of the joint, so the structure is simple, a little space is occupied, and sealing performance of the joint is ensured. When the quick-insertion coupling joint is disassembled, the female coupler body 1 is held by hand, the sliding sleeve 2 is pushed in order that the second boss 12 is away from the limiting hole 9, at this time, the limiting element 5 is disconnected from the second boss 12 and moves outwards from the limiting hole 9 in the radial direction of the socket, and after the limiting element 5 is disconnected from the limiting groove 13 of the Camlock male adapter 7, the Camlock male adapter 7 and the female coupler body 1 are separated, so disassembly is convenient and quick. The quick-insertion coupling joint provided by the present invention can replace all kinds of Camlock female couplers, and its specification range is from 1/2" to 8", where the material of the female coupler body 1 and the sliding sleeve 2 can be aluminum alloy, copper alloy, stainless steel, carbon steel, PP and the like.

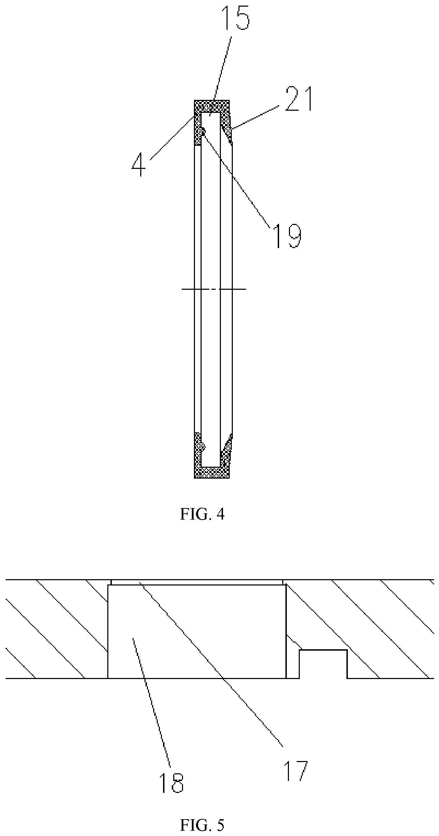

As shown in FIG. 4, a rectangular annular groove 15 is arranged in an inner wall of the sealing gasket 4; when a fluid is conveyed, a pressure difference is generated between an interior of the rectangular annular groove 15 and an exterior thereof, the fluid extrudes the sealing gasket 4 from the interior of the rectangular annular groove 15 to the exterior thereof, a seal surface of the sealing gasket 4 is stressed, the sealing gasket 4 is unlikely to generate leakage, and within a certain pressure range, the greater an internal pressure is, the better the sealing performance is; one end face 21 of the sealing gasket 4 is inclined outwards, so, when the internal pressure is low, the Camlock male adapter 7 extrudes the inclined end face 21 of the sealing gasket 4 such that the seal surface of the sealing gasket 4 is in extrusion contact to ensure no leakage under a low pressure; and an annular boss 19 is arranged in the rectangular annular groove 15 to improve strength and elasticity of the sealing gasket 4.

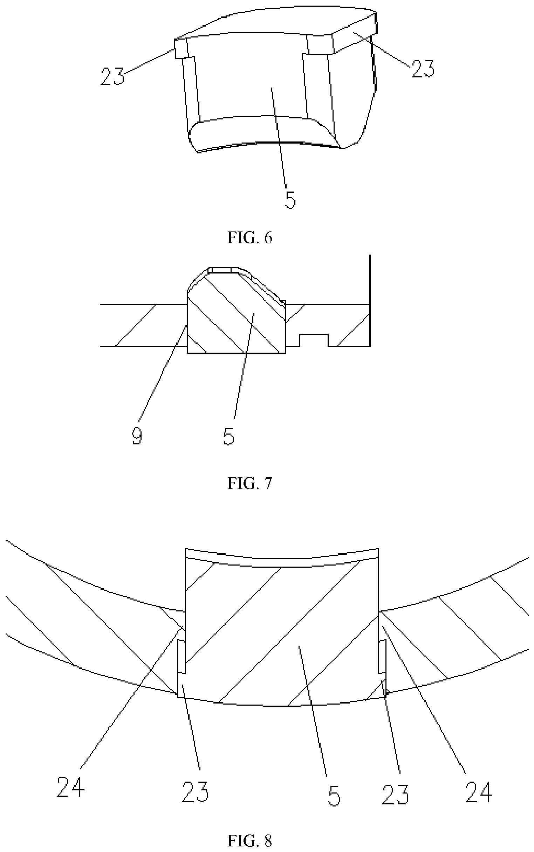

As shown in FIG. 5 to FIG. 8, the limiting element 5 is a limiting ball, the limiting ball is made of steel so as to be convenient in manufacture and low in costs, the limiting hole is a step hole when the limiting element 5 is the limiting ball, the limiting hole 9 includes a first hole 17 and a second hole 18, which are radially arranged, the first hole 17 is close to the interior in a radial direction of the second hole 18, the diameter of the first hole 17 is less than the diameter of the limiting ball such that the first hole 17 can prevent the limiting ball from separating from the limiting hole 9 inwards; however, the limiting element 5 is not limited to the limiting ball and can also be a limiting block, the limiting block can be a square limiting block, the corresponding limiting hole 9 is also a square limiting hole, the limiting block is arranged in the limiting hole 9 in a sliding manner, there is a great contact area of a side wall of the limiting block and an inner wall of the limiting hole 9 such that stress effect is great, an inclined surface is respectively arranged on two sides, in an axial direction of the socket, of one end close to the interior in a radial direction of the limiting block such that the Camlock male adapter 7 is conveniently inserted into or pulled out of the socket, a limiting bulge 24 is arranged on one side surface close to the interior in a radial direction of the limiting hole 9, a coupling bulge 23 is arranged on one side wall of one end close to the exterior in a radial direction of the limiting block, and after the limiting block slides inwards in the radial direction of the limiting hole 9 till the limiting bulge 24 and the coupling bulge 23 are in contact, the limiting bulge 24 can limit the coupling bulge 23 to prevent the coupling bulge from continuously sliding inwards.

As shown in FIG. 1, a dust-proof boss 20 is arranged on the inner wall of the sliding sleeve 2, the dust-proof boss 20 is arranged at one end, close to the port of the socket, of the sliding sleeve 2, and the internal diameter of the dust-proof boss 20 is greater than the external diameter of the socket such that the dust-proof boss 20 can prevent outside dust from entering the sliding sleeve 2.

The elastic element 3 is a spring and has a simple structure.

In the embodiment, the seal retainer 8 is a sealing boss, the sealing gasket 4 is arranged on one surface, close to the port of the socket, of the sealing boss, a connection port is arranged at one end, away from the socket, of the female coupler body 1, the connection port and the socket are interconnected, and the connection port is used for connecting a pipe fitting, where an internal thread 16 is arranged in an inner wall of the connection port, certainly an external thread can also be arranged in an outer wall of the connection port, so the connection port is connected with the pipe fitting through the thread, which is convenient and has great sealing performance.

### Embodiment 2

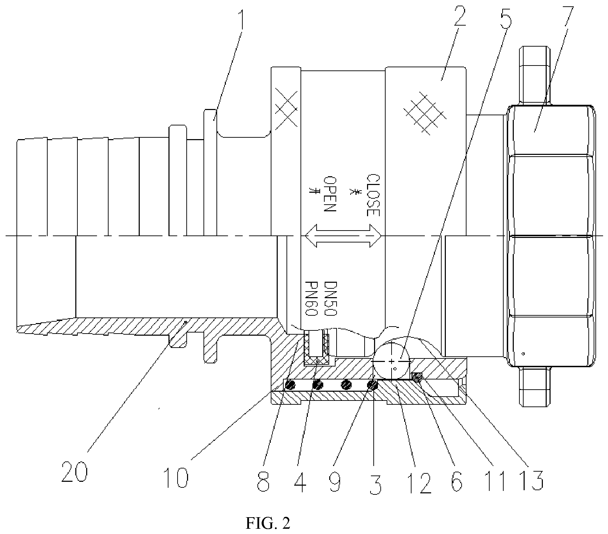

As shown in FIG. 2, the embodiment provides a quick-insertion coupling joint, and the difference from the quick-insertion coupling joint in Embodiment 1 lies in: anti-skid mesh-shaped bulges 14 are arranged on an outer surface of a sliding sleeve 2 such that friction between the sliding sleeve 2 and the hand can be increased and the sliding sleeve 2 is convenient to be pushed.

Where a connection port for connecting a pipe fitting is a tail pipe 22, and the quick-insertion coupling joint is connected with the pipe fitting through the tail pipe 22.

### Embodiment 3

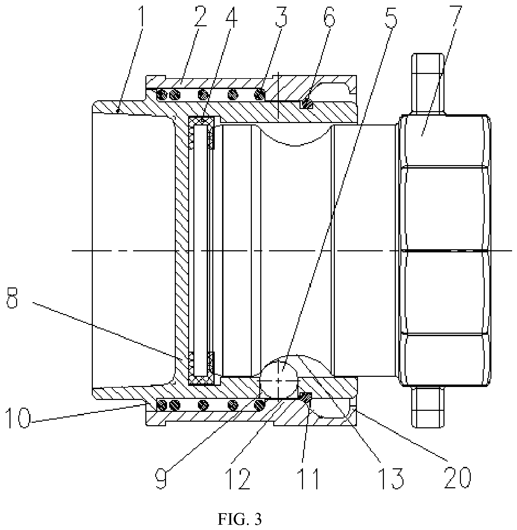

As shown in FIG. 3, in a quick-insertion coupling joint provided by the embodiment, a seal retainer 8 is a sealing diaphragm, the sealing diaphragm seals one end, away from a socket, of a female coupler body, a sealing gasket 4 is arranged on one surface, close to a port of the socket, of the sealing diaphragm, and due to arrangement of the sealing diaphragm, a pipe fitting can be sealed and dust can be prevented.

## Claims

1. A quick-insertion coupling joint, comprising a female coupler body (1), a sliding sleeve (2), elastic elements (3), a sealing gasket (4), limiting elements (5) and a retaining ring (6), wherein a socket is arranged in one end of the female coupler body (1) and is used for connecting a Camlock male adapter (7), a seal retainer (8) is arranged in an inner wall of the socket, the sealing gasket (4) is arranged on one surface, close to a port of the socket, of the seal retainer (8), multiple limiting holes (9) are circumferentially arranged in a side wall of the socket, a limiting element is arranged in each limiting hole, the limiting hole can limit the limiting element to prevent the limiting element from separating from the limiting hole inwards, a first boss (10) is arranged on an outer side wall of the female coupler body (1), the sliding sleeve (2) sleeves the exterior of the first boss (10), a coupling groove (11) is arranged in the outer side wall of the female coupler body (1), the coupling groove (11) is arranged between the port of the socket and the limiting hole, the retaining ring (6) is arranged in the coupling groove (11), a second boss (12) is arranged on an inner wall of the sliding sleeve (2), the second boss (12) is arranged between the first boss (10) and the retaining ring (6), the internal diameter of the second boss (12) is less than the external diameter of the retaining ring (6), the elastic elements (3) sleeve the exterior of the female coupler body (1) while the elastic elements (3) are arranged between the second boss (12) and the first boss (10), the elastic elements (3) are in a compression state, and a limiting groove (13) is circumferentially arranged in an outer wall of the Camlock male adapter (7); when the Camlock male adapter (7) is inserted into the socket and the second boss (12) slides to come into contact with the retaining ring (6), the second boss (12) can ensure that the limiting element is fixed in the limiting groove (13) and the Camlock male adapter (7) tightly presses the sealing gasket (4) at the seal retainer (8); and an end face, away from the first boss (10), of the second boss (12) is inclined to one end away from the first boss (10), so, when the second boss (12) slides away from the limiting hole, the limiting element can be disconnected from the limiting groove (13), wherein the sealing gasket (4) comprises a rectangular annular groove (15) which is arranged in an inner wall of the sealing gasket (4);
**characterised in that** the sealing gasket (4) comprises one end face (21) which is inclined outwards and which is configured to be in extrusion contact with a Camlock male adapter (7), and the sealing gasket (4) comprises an annular boss (19) which is arranged in the rectangular annular groove (15) to improve strength and elasticity of said sealing gasket (4), said annular boss (19) is arranged in an interior end face of said rectangular annular groove (15) which is opposite to the one end face (21).

2. The quick-insertion coupling joint according to claim 1, wherein anti-skid mesh-shaped bulges (14) are arranged on an outer surface of the sliding sleeve (2).

3. The quick-insertion coupling joint according to claim 1, wherein the seal retainer (8) is a sealing boss, the sealing gasket (4) is arranged on one surface, close to the port of the socket, of the sealing boss, a connection port is arranged at one end, away from the socket, of the female coupler body (1), the connection port and the socket are interconnected, and the connection port is used for connecting a pipe fitting.

4. The quick-insertion coupling joint according to claim 1, wherein the seal retainer (8) is a sealing diaphragm, the sealing diaphragm seals one end, away from the socket, of the female coupler body (1), the sealing gasket (4) is arranged on one surface, close to the port of the socket, of the sealing diaphragm.

5. The quick-insertion coupling joint according to claim 1, wherein the limiting element is a limiting ball or a limiting block.

6. The quick-insertion coupling joint according to claim 1, wherein a dust-proof boss (20) is arranged on the inner wall of the sliding sleeve (2), the dust-proof boss (20) is arranged at one end, close to the port of the socket, of the sliding sleeve (2), and the internal diameter of the dust-proof boss (20) is greater than the external diameter of the socket.

7. The quick-insertion coupling joint according to claim 1, wherein the elastic element is a spring.

## Patentansprüche

1. Schnellsteckkupplungsanschluss, umfassend einen Aufnahmekupplungskörper (1), eine Gleithülse (2), elastische Elemente (3), eine Dichtung (4), Begrenzungselemente (5) und einen Rückhaltering (6), wobei eine Buchse in einem Ende des Aufnahmekupplungskörpers (1) angeordnet ist und zur Verbindung mit einem Camlock-Steckadapter (7) verwendet wird, wobei ein Dichtungshalter (8) in einer Innenwand der Buchse angeordnet ist, wobei die Dichtung (4) auf einer Fläche, nahe einer Anschlussstelle der Buchse, des Dichtungshalters (8) angeordnet ist, mehrere Begrenzungslöcher (9) in Umfangsrichtung in einer Seitenwand der Buchse angeordnet sind, ein Begrenzungselement in jedem Begrenzungsloch angeordnet ist, das Begrenzungsloch das Begrenzungselement begrenzen kann, um das Begrenzungselement daran zu hindern, sich von dem Begrenzungsloch nach innen zu trennen, ein erster Vorsprung (10) an einer äußeren Seitenwand des Aufnahmekupplungskörpers (1) angeordnet ist, die Gleithülse (2) die Außenseite des ersten Vorsprungs (10) umhüllt, eine Kupplungsnut (11) in der äußeren Seitenwand des Aufnahmekupplungskörpers (1) angeordnet ist, die Kupplungsnut (11) zwischen der Anschlussstelle der Buchse und dem Begrenzungsloch angeordnet ist, der Rückhaltering (6) in der Kupplungsnut (11) angeordnet ist, ein zweiter Vorsprung (12) an einer Innenwand der Gleithülse (2) angeordnet ist, der zweite Vorsprung (12) zwischen dem ersten Vorsprung (10) und dem Rückhaltering (6) angeordnet ist, der Innendurchmesser des zweiten Vorsprungs (12) kleiner ist als der Außendurchmesser des Rückhalterings (6), die elastischen Elemente (3) die Außenseite des Aufnahmekupplungskörpers (1) umhüllen, während die elastischen Elemente (3) zwischen dem zweiten Vorsprung (12) und dem ersten Vorsprung (10) angeordnet sind, die elastischen Elemente (3) sich in einem komprimierten Zustand befinden, und eine Begrenzungsnut (13) in Umfangsrichtung in einer Außenwand des Camlock-Steckadapters (7) angeordnet ist; wenn der Camlock-Steckadapter (7) in die Buchse eingeführt wird und der zweite Vorsprung (12) gleitet, um in Kontakt mit dem Rückhaltering (6) zu kommen, der zweite Vorsprung (12) sicherstellen kann, dass das Begrenzungselement in der Begrenzungsnut (13) fixiert wird und der Camlock-Steckadapter (7) die Dichtung (4) an den Dichtungshalter (8) fest drückt; und eine Endfläche, abgewandt von dem ersten Vorsprung (10), des zweiten Vorsprungs (12) zu einem Ende abgewandt von dem ersten Vorsprung (10) geneigt ist, so dass, wenn der zweite Vorsprung (12) von dem Begrenzungsloch weggleitet, das Begrenzungselement von der Begrenzungsnut (13) gelöst werden kann, wobei die Dichtung (4) eine rechteckige ringförmige Nut (15) umfasst, die in einer Innenwand der Dichtung (4) angeordnet ist;
**dadurch gekennzeichnet, dass** die Dichtung (4) eine Endfläche (21) umfasst, die nach außen geneigt ist und die dazu ausgebildet ist, in Extrusionskontakt mit einem Camlock-Steckadapter (7) zu stehen, und die Dichtung (4) einen ringförmigen Vorsprung (19) umfasst, der in der rechteckigen ringförmigen Nut (15) angeordnet ist, um die Festigkeit und Elastizität der Dichtung (4) zu verbessern, wobei der ringförmige Vorsprung (19) in einer inneren Endfläche der rechteckigen ringförmigen Nut (15) angeordnet ist, die der einen Endfläche (21) gegenüber liegt.

2. Schnellsteckkupplungsanschluss nach Anspruch 1, wobei auf einer Außenfläche der Gleithülse (2) rutschhemmende, netzförmige Ausbuchtungen (14) angeordnet sind.

3. Schnellsteckkupplungsanschluss nach Anspruch 1, wobei der Dichtungshalter (8) ein Dichtungsvorsprung ist, die Dichtung (4) auf einer Fläche, nahe der Anschlussstelle der Buchse, des Dichtungsvorsprungs angeordnet ist, eine Verbindungsanschlussstelle an einem Ende, abgewandt von der Buchse, des Aufnahmekupplungskörpers (1) angeordnet ist, die Verbindungsanschlussstelle und die Buchse miteinander verbunden sind, und die Verbindungsanschlussstelle zum Verbinden eines Rohrfittings verwendet wird.

4. Schnellsteckkupplungsanschluss nach Anspruch 1, wobei der Dichtungshalter (8) eine Dichtungsmembran ist, die Dichtungsmembran ein Ende, abgewandt von der Buchse, des Aufnahmekupplungskörpers (1) abdichtet, die Dichtung (4) auf einer Fläche, nahe der Anschlussstelle der Buchse, der Dichtungsmembran angeordnet ist.

5. Schnellsteckkupplungsanschluss nach Anspruch 1, wobei das Begrenzungselement eine Begrenzungskugel oder ein Begrenzungsblock ist.

6. Schnellsteckkupplungsanschluss nach Anspruch 1, wobei ein staubdichter Vorsprung (20) an der Innenwand der Gleithülse (2) angeordnet ist, wobei der staubdichte Vorsprung (20) an einem Ende nahe der Anschlussstelle der Buchse der Gleithülse (2) angeordnet ist, und wobei der Innendurchmesser des staubdichten Vorsprungs (20) größer als der Außendurchmesser der Buchse ist.

7. Schnellsteckkupplungsanschluss nach Anspruch 1, wobei das elastische Element eine Feder ist.

## Revendications

1. Joint d'accouplement à insertion rapide, comprenant un corps d'accoupleur femelle (1), un manchon coulissant (2), des éléments élastiques (3), une garniture d'étanchéité (4), des éléments de limitation (5) et un anneau de retenue (6), dans lequel un emboîtement est agencé dans une extrémité du corps d'accoupleur femelle (1) et est utilisé pour la connexion d'un adaptateur mâle Camlock (7), un élément de retenue de joint (8) est agencé dans une paroi interne de l'emboîtement, la garniture d'étanchéité (4) est agencée sur une surface, à proximité d'un port de l'emboîtement, de l'organe de retenue de joint (8), de multiples trous de limitation (9) sont agencés circonférentiellement dans une paroi latérale de l'emboîtement, un élément de limitation est agencé dans chaque trou de limitation, le trou de limitation peut limiter l'élément de limitation pour empêcher l'élément de limitation de se séparer du trou de limitation vers l'intérieur, un premier bossage (10) est agencé sur une paroi latérale externe du corps d'accoupleur femelle (1), le manchon coulissant (2) manchonne l'extérieur du premier bossage (10), une rainure d'accouplement (11) est agencé dans la paroi latérale externe du corps d'accoupleur femelle (1), la rainure d'accouplement (11) est agencée entre le port de l'emboîtement et le trou de limitation, l'anneau de retenue (6) est agencée dans la rainure d'accouplement (11), un deuxième bossage (12) est agencé sur une paroi interne du manchon coulissant (2), le deuxième bossage (12) est agencé entre le premier bossage (10) et l'anneau de retenue (6), le diamètre interne du deuxième bossage (12) est inférieur au diamètre externe de l'anneau de retenue (6), les éléments élastiques (3) manchonnent l'extérieur du corps d'accoupleur femelle (1) tandis que les éléments élastiques (3) sont agencés entre le deuxième bossage (12) et le premier bossage (10), les éléments élastiques (3) sont dans un état de compression, et une rainure de limitation (13) est agencée circonférentiellement dans une paroi externe de l'adaptateur mâle Camlock (7) ; lorsque l'adaptateur mâle Camlock (7) est inséré dans l'emboîtement et que le deuxième bossage (12) coulisse pour venir en contact avec l'anneau de retenue (6), le deuxième bossage (12) peut garantir que l'élément de limitation est fixé dans la rainure de limitation (13) et que l'adaptateur mâle Camlock (7) presse fermement la garniture d'étanchéité (4) au niveau de l'organe de retenue de joint (8) ; et une face d'extrémité, à l'écart du premier bossage (10), du deuxième bossage (12) est inclinée vers une extrémité à l'écart du premier bossage (10), donc, lorsque le deuxième bossage (12) coulisse à l'écart du trou de limitation, l'élément de limitation peut être déconnecté de la rainure de limitation (13), dans lequel la garniture d'étanchéité (4) comprend une rainure annulaire rectangulaire (15) qui est agencée dans une paroi interne de la garniture d'étanchéité (4) ;
**caractérisé en ce que** la garniture d'étanchéité (4) comprend une face d'extrémité (21) qui est inclinée vers l'extérieur et qui est conçu pour être en contact par extrusion avec un adaptateur mâle Camlock (7), et la garniture d'étanchéité (4) comprend un bossage annulaire (19) qui est agencé dans la rainure annulaire rectangulaire (15) pour améliorer la résistance et l'élasticité de ladite garniture d'étanchéité (4), ledit bossage annulaire (19) est agencé dans une face d'extrémité intérieure de ladite rainure annulaire rectangulaire (15) qui est opposée à la face d'extrémité (21).

2. Joint d'accouplement à insertion rapide selon la revendication 1, dans lequel des renflements antidérapants en forme de maille (14) sont agencés sur une surface externe du manchon coulissant (2).

3. Joint d'accouplement à insertion rapide selon la revendication 1, dans lequel l'organe de retenue de joint (8) est un bossage d'étanchéité, la garniture d'étanchéité (4) est agencée sur une surface, à proximité du port de l'emboîtement, du bossage d'étanchéité, un port de connexion est agencé au niveau d'une extrémité, à l'écart de l'emboîtement, du corps d'accoupleur femelle (1), le port de connexion et l'emboîtement sont interconnectés, et le port de connexion est utilisé pour la connexion d'un raccord de tuyau.

4. Joint d'accouplement à insertion rapide selon la revendication 1, dans lequel l'élément de retenue de joint (8) est un diaphragme d'étanchéité, le diaphragme d'étanchéité étanchéifie une extrémité, à l'écart de l'emboîtement, du corps d'accoupleur femelle (1), la garniture d'étanchéité (4) est agencée sur une surface, à proximité du port de l'emboîtement, du diaphragme d'étanchéité.

5. Joint d'accouplement à insertion rapide selon la revendication 1, dans lequel l'élément de limitation est une bille de limitation ou un bloc de limitation.

6. Joint d'accouplement à insertion rapide selon la revendication 1, dans lequel un bossage anti-poussière (20) est agencé sur la paroi interne du manchon coulissant (2), le bossage anti-poussière (20) est agencé au niveau d'une extrémité, à proximité du port de l'emboîtement, du manchon coulissant (2), et le diamètre interne du bossage anti-poussière (20) est supérieur au diamètre externe de l'emboîtement.

7. Joint d'accouplement à insertion rapide selon la revendication 1, dans lequel l'élément élastique est un ressort.
